# EUROPÄISCHE PATENTANMELDUNG

(11) **EP 3 522 314 A1**
(43) Veröffentlichungstag der Anmeldung: **07.08.2019**
(21) Anmeldenummer: 19154739.7
(22) Anmeldetag: 31.01.2019
(51) Int. Cl.: H02G 1/02, H02G 7/18

(54) **SCHUTZGERÜST, INSBESONDERE FREILEITUNGSSCHUTZGERÜST SOWIE VERFAHREN ZUM ERRICHTEN EINES SCHUTZGERÜSTES**

(30) Priorität: 06.02.2018 DE 102018102637
(71) Anmelder: Hanspach, Bodo, 48249 Dulmen (DE)
(72) Erfinder: Hanspach, Bodo, 48249 Dülmen (DE)
(74) Vertreter: Lippert Stachow Patentanwälte Rechtsanwälte

(57) **Zusammenfassung**

Die Erfindung betrifft Schutzgerüst, insbesondere Freileitungsschutzgerüst, zumindest umfassend zwei langestreckte Turmelemente; ein langgestrecktes Obergurtelement, dass zwischen den beiden Turmelementen angeordnet und endseitig jeweils an einem der beiden Turmelemente zur Bereitstellung eines Gerüstportals befestigt ist, wobei beide Turmelemente jeweils im Bereich ihres, dem Obergurtelement abgewandten Längsendabschnitt mit einem zugeordneten Standelement mittels einer Verbindungseinrichtung verbunden sind, und beide Standelemente jeweils eine Standfläche zum Abstützen an einem Untergrund aufweisen. Das erfindungsgemäße Schutzgerüst zeichnet sich dadurch aus, dass beide Verbindungseinrichtungen als gekoppelt auslenkbare und in einer Arbeitsposition blockierbare Schwenkverbindungen ausgeführt sind zum Schwenken des Gerüstportals zu den beiden Standelementen ausgehend von einer Montageposition des Gerüstportals in die Arbeitsposition. Die Erfindung betrifft ferner eine ein Verfahren zur Errichtung eines solchen Schutzgerüstes.

## Beschreibung

Die Erfindung betrifft ein Schutzgerüst, insbesondere ein Freileitungsschutzgerüst, zumindest umfassend zwei langgestreckte Turmelemente, ein langgestrecktes Obergurtelement, das zwischen den beiden Turmelementen angeordnet und endseitig jeweils an einem der beiden Turmelemente zur Bereitstellung eines Gerüstportals befestigt ist, wobei beide Turmelemente jeweils im Bereich ihres, dem Obergurtelement abgewandten Längsendabschnitt mit einem zugeordneten Standelement mittels einer Verbindungseinrichtung verbunden sind, wobei die Standelemente jeweils eine Standfläche zur Abstützung an einem Untergrund aufweisen. Die Erfindung betrifft darüber hinaus ein Verfahren zur Errichtung eines solchen Schutzgerüstes.

Derartige Schutzgerüste sind auf dem Gebiet wohlbekannt. Sie werden beispielsweise bei Arbeiten an Freileitungen oder Stromoberleitungen verwendet, um bei zu verhindern, dass Leiterteile auf gefährdete Abschnitte, beispielsweise Straßen, Wege oder Eisenbahntrassen fallen. Insbesondere in solchen Fällen, in welchen die zu schützenden Abschnitte geringe Abmessungen von wenigen Metern haben, kommen auch heute noch Holzkonstruktionen zur Ausbildung eines Schutzportals zum Einsatz, bei welchen zwei jeweils auf einem Standelement fixierte hölzerne Turmelemente durch einen die freien Enden der Turmelemente verbindenden hölzernen Querträger gekoppelt sind. Der Aufbau solcher Schutzgerüste ist vergleichsweise aufwendig und gefahrenträchtig. Darüber hinaus sind Schutzgerüste auf dem Gebiet bekannt, welche mit herkömmlichen Gerüstelementen, wie sie in der Baubranche bekannt sind, aufgebaut werden. Der Aufbau derartiger herkömmlicher Gerüste ist jedoch extrem zeitaufwendig und damit kostspielig.

Der Erfindung liegt die Aufgabe zugrunde, ein herkömmliches Schutzgerüst, insbesondere ein Freileitungsschutzgerüst in Bezug auf seine Gestaltung so zu verbessern, dass die Rüstzeiten für den Auf- bzw. Abbau verringert werden.

Diese Aufgabe wird erfindungsgemäß mit einem Schutzgerüst mit den Merkmalen von Anspruch 1 gelöst. Das erfindungsgemäße Schutzgerüst zeichnet sich dadurch aus, dass beide Verbindungseinrichtungen als gekoppelte und damit synchron auslenkbare und in einer Arbeitsposition blockierbare Schwenkverbindungen ausgeführt sind zum Schwenken des Gerüstportals zu den beiden Standelementen, ausgehend von einer Montageposition bzw. Montageanordnung des Gerüstportals in die Arbeitsposition, in welcher das Schutzportal aufgerichtet ist.

Der Erfindung liegt die grundsätzliche Idee zugrunde, ein Schutzgerüst so zu konstruieren, dass es auf einfache Weise in einer ersten Anordnung, eine Montageanordnung zusammengesetzt werden kann und danach in eine Arbeitsanordnung bzw. Arbeitsposition übergeführt werden kann, in dem Teile des Gerüst zueinander durch eine einzelne Schwenkbewegung bewegt werden. Vorteilhaft kann der eigentliche Zusammenbau des erfindungsgemäßen Schutzgerüstes in einer bevorzugten Ausführungsform direkt auf dem Untergrund des Schutzgerüstes durchgeführt werden, auf welchem das Schutzgerüst zu errichten ist. In ähnlicher Weise kann auch der Abbau des erfindungsgemäßen Schutzgerüstes wesentlich verkürzt werden, dadurch, dass das Schutzgerüst ausgehend von der Arbeitsposition zunächst in die Montageposition bzw. Montageanordnung übergeführt wird, dadurch, dass das Gerüstportal mittels der beschriebenen Schwenkverbindungen insbesondere auf den Boden bzw. den Untergrund, an dem sich die Standelemente abstützen, umgeschwenkt wird und dadurch eine Demontage der Teile in erhöhten Bereichen, beispielsweise unter Nutzung von Leitern und/oder Hubelementen, vermieden werden kann. Die beiden, jeweils zwischen Turmelement und Standelement vorgesehenen Verbindungseinrichtungen in Form von Schwenkverbindungseinrichtungen sind beim erfindungsgemäßen Schutzgerüst dadurch gekoppelt und synchron auslenkbar, weil Turmelement und Obergurtelement und die Verbindung zwischen diesen stabil und starr ausgeführt sein können, sodass letztlich bei der Schwenkbewegung eines Turmelements zu seinem zugeordneten Standelement eine synchrone Bewegung des anderen Turmelements zu dessen zugeordneten Standelement zwangsläufig erfolgen kann.

Weitere erfindungsgemäße Merkmale und Weiterbildungen der Erfindung sind in der allgemeinen Beschreibung, den Figuren, der Figurenbeschreibung sowie in den Unteransprüchen angegeben.

Die beschriebene Schwenkverbindung zwischen jeweiligem Turmelement und Standelement kann auf unterschiedliche Weise ausgebildet sein, beispielsweise mittels einer Scharnierverbindung, die als verbolzte Steckverbindung ausgeführt sein kann. Die Schwenkachsen der beiden Verbindungsstellen, d.h. der Verbindung der beiden Turmelemente mit dem jeweils zugeordneten Standelement können koaxial zueinander verlaufen, ferner kann der nutzbare Schwenkwinkel im Bereich von ca. 90° liegen, sodass das Gerüstportal in Einbaulage von einer beispielsweise horizontalen Montageanordnung bzw. -position in eine vertikale Arbeitsanordnung bzw. Arbeitsposition schwenkbar ist.

In einer Ausführungsform kann vorgesehen sein, dass das Gerüstportal manuell von seiner Montageposition in die Arbeitsposition eingeschwenkt wird. Insbesondere kann eine an zumindest einem der Standelemente abgestützte Krafteinrichtung vorgesehen sein zur Ausübung einer am Gerüstportal angreifenden Zugkraft unter spitzem Winkel zur Portalebene über einen Winkelbereich von - je nach Ausführungsform - mindestens 10°, mindestens 15°, mindestens 20°, mindestens 25° oder mindestens 30°. Die jeweiligen Gradbereichsangaben bezeichnen dabei den Winkelbereich beim Schwenken des Gerüstportals, ausgehend von einer Montageposition zu der Arbeitsposition, wobei bei letzterer sich das Gerüstportal vollständig über die Standelemente am Untergrund abstützt, während es in der Montageposition durch seitliche Abschnitte der Turmelement und/oder des Obergurtelements am Untergrund oder einer Abstützung getragen ist.

Vorzugsweise verläuft die aufgewendete Zugkraft senkrecht zu den Schwenkachsen der Verbindungseinrichtungen. Es sei bemerkt, dass unter der Angabe "Portalebene" eine Ebene gemeint ist, die durch die drei in der Regel linearen Elemente, d.h. die beiden Turmelemente und das Obergurtelement aufgespannt ist. Vorzugsweise sind die beiden Turmelemente in Bezug auf ihre Längsrichtung senkrecht zur Längsrichtung des Obergurtelements zur Gestaltung des besagten Gerüstportals angeordnet.

Die an einem der Standelemente abstützbare oder ansetzbare Krafteinrichtung kann eine manuell betätigbare oder auch eine motorbetriebene Krafteinrichtung sein. In einer Ausführungsform kann diese beispielsweise eine Windeneinrichtung wie eine Seilwinde umfassen, die sich an einem der Standelemente abstützt und mittels eines Zugmittels mit dem Gerüstportal, u.U. mittels einer Umlenkrolle verbindbar bzw. verbunden ist. Vorzugsweise kann vorgesehen sein, die Verbindung zwischen Standelement und Krafteinrichtung zu deren Abstützung manuell lösbar zu gestalten, sodass nach dem Aufrichten des Gerüstportals die Krafteinrichtung wieder einfach vom Standelement gelöst werden kann, um beispielsweise diese an einem anderen Gerüst bzw. Gerüstbereich zum Aufrichten eines Gerüstportals einzusetzen. Je nach Ausführungsform kann die beispielhaft genannte Seilwinde manuell oder motorisch betreibbar sein.

Aufgrund der beschriebenen Formstabilität bzw. Starrheit des Gerüstportals des erfindungsgemäßen Schutzgerüstes kann es in bestimmten Ausführungsformen ausreichend sein, eine einzelne Krafteinrichtung vorzusehen zum Aufrichten des Gerüstportals, derartig, dass die Krafteinrichtung sich an einem der beiden Standelemente abstützt und das Zugmittel, beispielsweise bewegt über eine manuell oder motorisch betriebene Seilwinde, an dem zugeordneten Turmelement, insbesondere im Bereich seines dem Obergurtelement zugewandten Endabschnittes befestigt ist, sodass durch die über die Seilwinde auf das Turmelement übertragene Kraft das gesamte Gerüstportal geschwenkt werden kann, beispielsweise ausgehend von einer Montageposition in eine Arbeitsposition oder umgekehrt, von der Arbeitsposition in eine Montageposition.

In einer anderen Ausführungsform kann jedoch auch vorgesehen sein, zur Verminderung von übermäßigen Längs- bzw. Querkräften auf das Schutzportal zwei Kraftmittel einzusetzen, die sich jeweils an einem zugeordneten Standelement abstützen. Beispielsweise können zwei Seilwinden angeordnet sein, die jeweils mittels eines Zugmittels wie einem Seil mit dem, diesem Standelement zugeordneten Turmelement des Gerüstportals verbunden sein, wobei beide Kraftmittel bzw. Seilwinden im Wesentlichen synchron betätigbar sein können. Vorzugsweise können die jeweiligen Zugmittel der Seilwinden jeweils am zugeordneten Turmelement des Gerüstportals verbunden sein, sodass beide Schwenkverbindungen nur senkrecht zur Drehachse belastet sind beim Auf- oder Abschwenken des Gerüstportals in die Arbeitsposition oder aus dieser heraus in die Montageposition des Gerüstportals.

In einer besonderen Ausführungsform kann die Krafteinrichtung ein Zwei- oder ein Dreibeingestell aufweisen, wobei das zugeordnete Standelement so ausgebildet sein kann, dass die Abstützung durch Aufstecken des Gestells auf das Standelement erfolgen kann. Insofern kann in dieser Ausführungsform das zugeordnete Standelement beispielsweise röhrenförmige Aufnahme umfassen, in welche die Füße des Gestells in diese Aufnahmen einsteckbar gestaltet sein können. Vorzugsweise kann vorgesehen sein, dass das Gestell eine Gabelaufnahme mit zwei parallel und beabstandet zueinander verlaufenden Schenkel aufweist, zwischen welchen schwenkbar ein weiterer Schenkel angeordnet ist, der endseitig eine Umlenkrolle für ein Zugmittel trägt, wobei eine Winde, beispielsweise eine Seilwinde für ein Zugmittel an den parallel und zumindest abschnittsweise beabstandet zueinander verlaufenden Schenkeln befestigt sein kann. Zur Erleichterung des Transports der beschriebenen Krafteinrichtung kann der weitere Schenkel zwischen den beabstandeten Schenkeln der Gabelaufnahme in eine Ruheposition einschwenkbar gestaltet sein.

In einer bevorzugten Ausführungsform können die Profile, Stäbe bzw. Streben der Turmelemente, des Obergurtelements bzw. der Obergurtelemente sowie der Standelemente Stahl, wie Baustahl umfassen bzw. aus diesem hergestellt sein, wobei zweckmäßigerweise für eine große Anzahl von Anwendungen die Länge der Obergurtelemente etwa 6 m, die Höhe der Turmelemente zwischen etwa 5,5 bis 6 m sowie die Abmessungen der Standelemente bei einer rechteckförmigen Grundfläche etwa 2 m x 60 cm betragen kann. Vorzugsweise können die Längsstreben bzw. -stäbe sowie die Querstreben im Längsendabschnitt der Elemente einen quadratischen Querschnitt mit einer Kantenlänge von etwa 5 cm, und die anderen, zwischen den Längsstreben bzw. -stäben quer verlaufenden Streben/Stäbe einen quadratischen Querschnitt mit einer Kantenlänge von etwa 3 cm aufweisen. Die Streben/Stäbe können hohl mit einer Materialdicke von etwa 2 mm ausgebildet sein. Die Angabe Streben, Stäbe und/oder Profile werden in der vorliegenden Anmeldung als synonyme Begriffe des gleichen Merkmals verwenden.

Zweckmäßigerweise können die Turmelemente als auch die Obergurtelemente eine flächige Rahmenstruktur aufweisen mit zwei parallel und beabstandet verlaufenden Längsprofilen, welche durch querverlaufende Streben verbunden sind. Die Angabe "flächige Rahmenstruktur" meint hier eine Struktur der Elemente, bei welcher die Länge bzw. Breite des Rahmens durch die jeweilige Erstreckung der Streben oder Stäben in Längsrichtung bzw. Breitenrichtung des Rahmens festgelegt wird, während die Tiefe bzw. Dicke der Rahmenstruktur im Wesentlichen bzw. allein durch den Durchmesser bzw. die Dicke der Stäbe bzw. Streben festgelegt wird. Die beschriebene Rahmenstruktur der Bauelemente ermöglicht eine schmale und leichte Bauweise des erfindungsgemäßen Gerüsts, vermindert die Auf- und Abbauzeiten im Vergleich zu herkömmlichen Gerüsten wesentlich und erleichtert die Lagerung und den Transport der Gerüstelemente.

Zweckmäßigerweise kann das erfindungsgemäße Schutzgerüst, bei welchem Turmelemente und Obergurtelemente als Stabwerk mit der beschriebenen Rahmenstruktur ausgebildet sind, so in Bezug auf seine geometrische Gestaltung und Materialwahl ausgebildet sein, das es eine Tragfähigkeit auf den Obergurtelementen von größer 200 kg pro Knoten im Stabwerk des Obergurtelements aufweist. In einer weiteren Ausführungsform kann die Tragfähigkeit größer 250 kg oder gar 300 kg pro Knoten im Obergurtelement betragen.

In einer Ausführungsform sind Obergurtelemente und/oder Turmelemente einstückig aufgebaut, es liegt jedoch im Rahmen der Erfindung, diese durch Aneinanderreihung und Befestigung mehrerer Teile aneinander bereitzustellen. Die Profile bzw. Streben können dabei einen beliebigen Querschnitt aufweisen, wobei ein rechteckiger Querschnitt bzw. ein runder Querschnitt bevorzugt werden kann.

Insbesondere in solchen Fällen, bei welchen sowohl das bzw. die Obergurtelement als auch die Turmelemente eine flächige Rahmenstruktur aufweisen, kann zweckmäßigerweise vorgesehen sein, dass die Turmelemente am obergurtseitigen Ende jeweils eine dreieckförmige Koppelstruktur aufweisen, die durch eine Querstrebe und zwei jeweils endstämmig darauf aufgesetzte und mit ihrem anderen Ende aufeinander zulaufende und an einem Endabschnitt miteinander verbundene Seitenstreben gebildet kann. In dieser Ausführungsform können etwa mittig an der Querstrebe und im Bereich des Endabschnitts der beiden Seitenstreben jeweils ein Steckverbinderelement, insbesondere in Form zumindest einer gelochten und sich senkrecht zur Längsrichtung des Turmelements und senkrecht zur Querstrebe erstreckende Verbindungslasche zum Befestigen des Obergurtelements an die beiden Turmelemente. Dabei kann vorgesehen sein, dass das jeweilige Obergurtelement endseitig jeweils mit den Steckverbinderelementen des jeweiligen Turmelements zusammenwirkende Steckverbinderelemente aufweist zum Bereitstellen einer jeweiligen Steckerverbinderanordnung. Dabei können die Steckverbinerelemente des Obergurtelements auch zumindest eine gelochte Verbindungslasche aufweisen, die - ausgerichtet zu der zugeordneten, zumindest einen gelochten Verbindungslasche des Turmelements eine solche Steckverbinderanordnung bilden, welche mittels eines durch die Lochungen geführten Bolzens gesichert ist. Eine wie beschrieben gestaltete Steckverbinderanordnung kann als Schwenkverbindung ausgebildet sein.

Im Falle der beschriebenen dreieckförmige Koppelstruktur der Turmelemente am obergurtseitigen Ende kann sie Befestigung am jeweiligen Obergurtelement an einer Seitenfläche des Turmelements erfolgen, während das Obergurtelement an seinen beiden Stirnseiten an jeweils einem Turmelement befestigbar ist, sodass die Seitenfläche beider Turmelemente senkrecht und die Seitenfläche des Obergurtelements parallel zur Schutzportalebene verlaufen.

Vorzugsweise kann das Obergurtelement in gleicher Weise eine flächige Rahmenstruktur aufweisen mit zwei parallelen und in Querrichtung beabstandeten Längsprofilen, welche durch quer verlaufende Streben verbunden sind. In dieser Ausführungsform kann vorgesehen sein, dass das Obergurtelement längsendseitig jeweils zumindest zwei in Querrichtung beabstandete und sich in Längsrichtung erstreckende Steckverbinderelemente, insbesondere in Form von gelochten Verbindungslaschen aufweist zum Befestigen des Obergurtelements an die beiden Turmelemente. Im zusammengesetzten Zustand können zum Befestigen des Obergurtelements an die beiden Turmelemente jeweils aneinander zugeordnete Verbinderelemente zur Gestaltung einer Verbinderanordnung vorgesehen sein, insbesondere wie beschrieben angeordnete Verbindungslaschen, überlappend mit zueinander ausgerichteten Lochungen, durch welche sich jeweils ein Bolzen erstreckt zur Fixierung der jeweiligen Verbindung. Vorzugsweise kann dabei vorgesehen sein, dass die zugeordneten Verbindungslaschen an Obergurtelement und Turmelement so ausgebildet sind, dass die beiden Bolzen zueinander senkrecht verlaufen, sodass ein besonders stabiler Formschluss zwischen Obergurtelement und Turmelement eingestellt ist. Allgemein kann vorgesehen sein, dass die jeweiligen gelochten Laschen mit denen des mit diesem zu verbindenden anderen Elementes sich überlappen mit zueinander ausgerichteten Lochungen, durch welche zur Fixierung der Verbindung ein Bolzen sich erstreckt, welcher gesichert ist. Zur Bereitstellung einer Schwenkverbindung zwischen Turmelement und zugeordnetem Standelement können beide Elemente sich überlappende Verbindungslaschen aufweisen mit zueinander ausgerichteten Lochungen, durch welche sich ein Bolzen erstreckt, dessen Achse die Schwenkachse des Gerüstportals festlegt. Beispielsweise kann vorgesehen sein, dass eine Lasche eines der beiden Elemente in Einbaulage in den Zwischenraum einer Doppellasche des anderen Elementes ragt mit zueinander ausgerichteten Lochungen, durch welche der Bolzen erstreckt ist. Dabei können beide zugeordneten Elemente auch beabstandete gelochte Doppellaschen aufweisen, wobei die Verbindungslaschen in axialer Richtung so versetzt sind, dass ein einzelner Bolzen sich durch hier alle vier Verbindungslaschen erstreckt zur Bereitstellung der angegebenen Schwenkverbindung zwischen einem Standelement und dem zugeordneten Turmelement.

Zur Bereitstellung einer Blockade der Schwenkverbindung in der Arbeitsposition des Schutzportals kann vorgesehen sein, dass die Turmelemente und zugeordnete Standelemente in Einbaulage zu den Verbindungslaschen der Schwenkverbindung in Richtung etwa senkrecht zur Portalebene beabstandete, weitere sich überlappende Verbindungslaschen aufweisen mit zueinander ausgerichteten Lochungen, durch welche sich ein weiterer Bolzen erstreckt. Dabei kann in ähnlicher Weise wie für die Schwenkverbindung vorgesehen sein, dass sich eine Lasche eines der beiden zu verbindenden Elemente in einen Zwischenraum einer Doppellasche des anderen Elements erstreckt, wobei die Blockierung durch Einschieben des weiteren Bolzens durch Lochungen der zueinander ausgerichteten Verbindungslaschen realisiert sein kann. Dabei kann, wie obenstehend in Bezug auf die Schwenkverbindung auch vorgesehen sein, an beiden Elementen gelochte Doppellaschen angeordnet sein, sodass sich der Blockierungsbolzen dann durch die vier überlappenden und in Bezug auf die Lochungen ausgerichteten Verbindungslaschen erstrecken kann. Es versteht sich, dass auch weitere Ausführungsformen zur Erhöhung der Stabilität im Rahmen der Erfindung liegen, bei welcher eine noch höhere Anzahl von Verbindungslaschen zur Gestaltung der Schwenkverbindung bzw. der Blockierung der Schwenkverbindung vorgesehen sind. Grundsätzlich kann vorgesehen sein, dass die Verbindungslaschen an beiden jeweiligen Elementen zur Gestaltung der Schwenkverbindung und die Verbindungslaschen zur Gestaltung der Blockade bzw. Fixierung der Schwenkverbindung identisch aufgebaut sein.

Zur Abstützung des Gerüstportals am Untergrund können die Standelemente jeweils ein durchgängiges Bodenblech, beispielsweise in Rechteck- oder Rundform aufweisen. In einer bevorzugten Ausführungsform kann auch vorgesehen sein, dass das Standelement einen, insbesondere etwa rechteckförmigen, Rahmen aus L-Profilstäben aufweist, wobei eine Mehrzahl von umfänglich auf dem Rahmen beabstandete und an diesem befestigte, jeweils zum Führen eines Ankerrnagels ausgebildete Rohrelemente aufweist, die in einem vorgegebenen Winkel zur und in Richtung auf die Standfläche angeordnet sind. Durch Eintreiben der Ankernägel, die auch als Arretiernägel bezeichnet werden können, in den Untergrund über die beschriebenen Rohrelemente können die Standelemente stabil am Untergrund fixiert werden. Vorzugsweise kann vorgesehen sein, die Rohrelemente in einem Winkel von etwa 45° zur Standfläche der Standelemente, beispielsweise zur auf dem Untergrund aufliegenden Seite der Profilstäbe anzuordnen. In einer anderen Ausführungsform kann auch vorgesehen sein, die Standelemente zur Aufnahme eines Gewichts wie eines Betonblocks auszubilden zur Fixierung der Standelemente am Untergrund. Die obenstehend beschriebenen Verbindungslaschen zur Gestaltung der Schwenkverbindung sowie die Verbindungslasche bzw. Verbindungslaschen zur Gestaltung der Fixierung der Schwenkverbindung können insbesondere an Querstreben angebracht sein, die sich zwischen dem beispielsweise rechteckförmigen Rahmen der Standelemente erstrecken.

Um das erfindungsgemäße Schutzgerüst an die jeweilige Topografie, beispielsweise ein Gefälle am Untergrund, an dem sich das erfindungsgemäße Schutzgerüst abstützt, anzupassen, kann zweckmäßigerweise vorgesehen sein, dass eine Verbindungseinrichtung zum Verbinden eines Turmelements mit einem zugeordneten Standelement in Turmlängsrichtung verstellbar ausgebildet ist. Beispielsweise kann vorgesehen sein, dass für die Verbindung zusammenwirkende Verbindungslaschen des Turmelements und/oder des Standelementes in Turmlängsrichtung zueinander verschiebbar gestalten sind, z.B. durch Verändern der wirksame Länge eines Schraubbolzens, mit welchem die jeweilige Verbindungslasche bzw. Verbindungsdoppellasche am Turmelement bzw. am Standelement befestigt sein kann.

Das erfindungsgemäße Schutzgerüst ist nicht auf die Bereitstellung eines einzelnen Schutzportals beschränkt, sondern kann modular aufbaut sein, insbesondere zur Bereitstellung einer Mehrzahl von Gerüstportalen, die geometrisch zueinander in bestimmter Weise angeordnet sind. Beispielsweise kann vorgesehen sein, eine Mehrzahl von nebeneinander angeordneten Schutzgerüstabschnitten mit je einem Schutzportal bereitzustellen, wobei alle Schutzportale in einer gemeinsamen Ebene liegen können. Ein solcher Aufbau kann dadurch realisiert sein, dass ein Standelement zur Verbindung mit zwei parallel und beabstandet zueinander ausgerichteten Turmelementen ausgebildet ist zur Gestaltung einer Mehrzahl von Gerüstportalen, die bezüglich ihrer Portalebene parallel zueinander ausgerichtet sind oder gar innerhalb einer gemeinsamen Ebene liegen. Dabei können die Verbindungslaschen zur Befestigung der beiden Turmelement an dem einen Standelement identisch aufgebaut sein.

In einer besonderen Ausführungsform kann auch eine Deckeleinrichtung für das Standelement zum Abdecken der Verbindungsstellen zwischen Standelement und Turmelement bzw. Turmelementen vorgesehen sein, insbesondere um eine Manipulation des Schutzgerüstes zu verhindern.

Die obige Aufgabe wird erfindungsgemäß darüber hinaus gelöst mit einem Verfahren zum Errichten eines Schutzgerüstes wie eines Freileitungsschutzgerüstes, das zumindest zwei langgestreckte Turmelemente, zumindest ein langgestrecktes Obergurtelement, das zwischen den beiden Turmelementen angeordnet und endseitig jeweils an einem der beiden Turmelemente starr zur Bereitstellung eines Gerüstportals befestigt ist, sowie zumindest zwei Standelemente aufweist, die eine Standfläche bereitstellen, und an welchen sich jeweils ein Turmelement abstützt, wobei die Befestigung eines jeweiligen Turmelements an einem zugeordneten Standelement jeweils eine blockierbare Schwenkverbindung aufweist, zumindest umfassend die Schritte:
- Bereitstellen von zumindest zwei Standelementen, zumindest zwei Turmelementen sowie zumindest einem Obergurtelement;
- Herstellen einer Montageanordnung, bei welcher ein Gerüstportal, umfassend zwei durch ein Obergurtelement starr verbundene Turmelementen, mit den zugeordneten Standelementen über die jeweilige Schwenkverbindung verbunden wird, und bei welcher das Gerüstportal in senkrechter Richtung zur Portalebene abgestützt ist;
- Schwenken des Gerüstportals in eine Arbeitsposition, in welcher die Gewichtskraft des Gerüstportals im Wesentlichen vollständig über die Standelemente abgeleitet wird; und
- Blockieren der Schwenkverbindung zur Arretierung der Arbeitsposition des Gerüstportals.

Das erfindungsgemäße Verfahren erlaubt die Befestigung des Obergurtelements an den beiden Turmelementen in einer Montageanordnung bzw. einer Montageposition, bei welcher sich die Bauteile des Gerüstportals im Bereich des Untergrundes bzw. Bodens, auf welchem das Schutzgerüst zu errichten ist, befinden, sodass die Befestigung des Obergurtelements an beide Turmelemente und darüber hinaus die Befestigung der Turmelemente an den zugeordneten Standelementen ohne Verwendung von Leitern oder Hubelementen stattfinden kann, was den Zusammenbau des Schutzgerüstes wesentlich vereinfacht. Es sei bemerkt, das die Angabe, dass das Gerüstportal senkrecht zur Portalebene abgestützt ist, meint, dass das Portalgewicht nicht allein in Längsrichtung zu den Turmelementen in den Untergrund abgeleitet wird, sondern z.B. dadurch, dass zumindest eine Abstützkraftkomponente senkrecht zur Schutzportalebene wirkt wie es insbesondere dann der Fall ist, wenn die Turmelemente des Schutzportals mit ihren Längsschmalseiten am Boden aufliegen.

Vorzugsweise kann vorgesehen sein, dass das Herstellen der Montageanordnung bzw. Montageposition des Schutzgerüstes bzw. des Gerüstportals das Befestigen der beiden Turmelemente an dem Obergurtelement zur Bereitstellung des Gerüstportals und das Befestigen der beiden Turmelemente jeweils an dem zugeordneten Standelement mittels einer Schwenkverbindung umfassen kann. Es sei betont, dass erfindungsgemäß die Reihenfolge dieser genannten Schritte nicht relevant ist. Bei einem bevorzugten Verfahren werden zur Gestaltung der Montageanordnung bzw. beim Einstellen der Montageanordnung die zumindest beiden Turmelemente direkt an ihrer sowie das zumindest eine Obergurtelement bzw. das Gerüstportal direkt vom Untergrund abgestützt. In dieser Ausführung können die Turmelemente in der Montageposition mit ihren Längsschmalseiten direkt am Boden aufliegen, sodass der Zusammenbau des Schutzportals und die Verbindung mit den Standelementen in direkter Bodennähe erfolgen können.

Die Erfindung wird im Folgenden durch das Beschreiben einer Ausführungsform unter Bezugnahme auf die beiliegenden Zeichnungen erläutert, wobei
- Figur 1: in einer perspektivischen Ansicht ein errichtetes, erfindungsgemäß gestaltetes Schutzgerüst,
- Figur 2: in einer perspektivischen Ansicht ein Standelement des Schutzgerüsts der Figur 1,
- Figur 3a: ein Turmelement des Schutzgerüsts der Figur 1 in einer Seitenansicht,
- Figur 3b: das Turmelement der Figur 3a in einer Ansicht in Einbaulage von oben,
- Figur 4a: ein Oberturmelement des Schutzgerüsts der Figur 1 in einer Seitenansicht,
- Figur 4b: das Turmelement der Figur 4a in einer Stirnseitenansicht,
- Figur 5: die Realisierung einer Schwenkverbindung zwischen einem Turmelement und einem Standelement des Schutzgerüstes der Figur 1 in einer perspektivischen Ansicht,
- Figur 6: den Verbindungsabschnitt zwischen einem Turmelement und einem Oberturmelement des Schutzgerüstes der Figur 1,

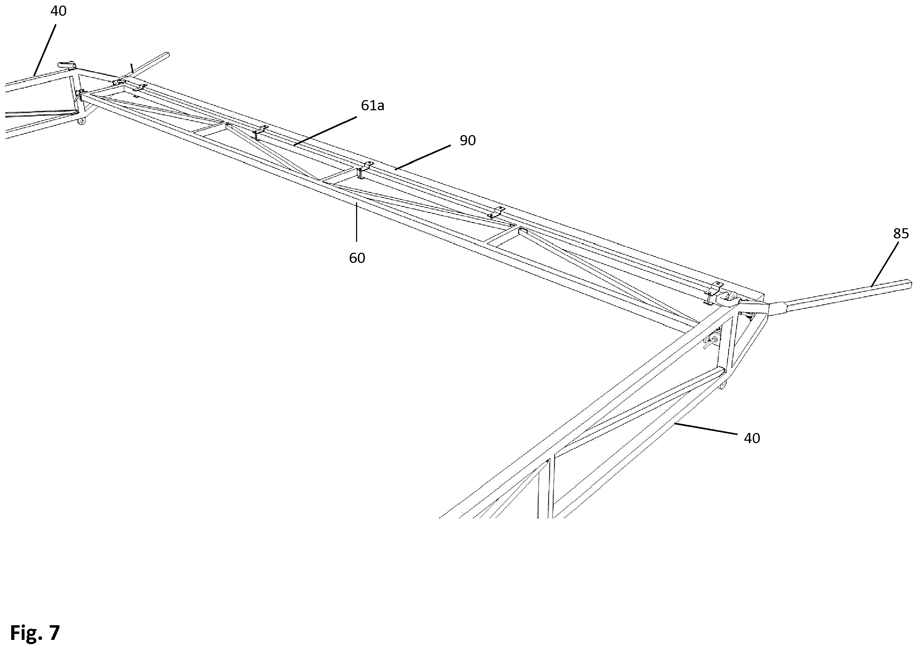

- Figur 7: in einer perspektivischen Teilansicht das mit zwei Turmelementen verbundene Oberturmelement des Schutzgerüsts der Figur 1,
- Figur 8a: das erfindungsgemäße Schutzgerüst der Figur 1 mit dem durch die beiden Turmelement und dem Oberturmelement gebildeten Schutzportal in einer MontagePosition und mit zwei auf den Standelementen aufgesetzten Seilwinden,
- Figur 8b: die Aufrichtung des Schutzportals von der Montageposition in die Arbeitsposition in einer Zwischenlage,
- Figur 9a: die Blockierung der Schwenkverbindung zwischen Turmelement und Standelement in einer Detailansicht und
- Figur 9b: eine Darstellung entsprechend der Figur 9a mit einer Höhennivellierung
zeigt.

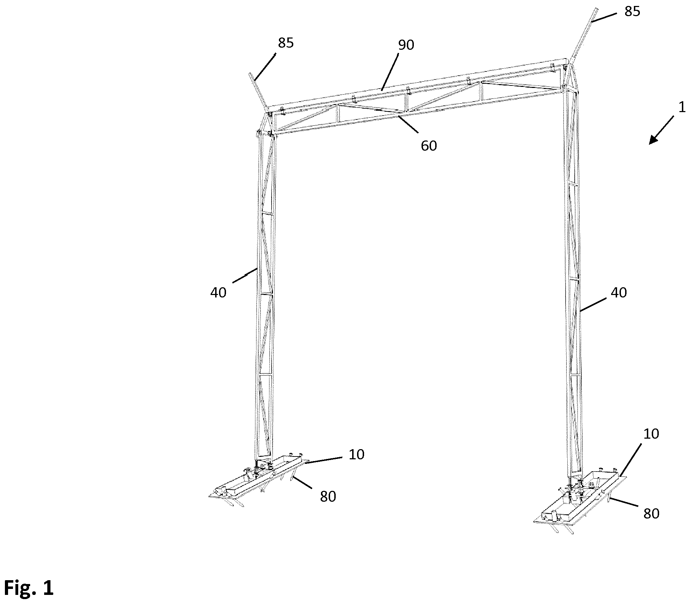

Figur 1 zeigt in einer perspektivischen Ansicht eine erfindungsgemäßes Schutzgerüst 1 in einer Arbeitsanordnung, wie es unter Freileitungen, die z.B. über Straßen, Bahntrassen oder Wege führen, zum Schutz vor herabfallenden Leitungen eingesetzt werden kann. Das erfindungsgemäße Schutzgerüst ist in Modulweise konstruiert, wobei die Verbindung der einzelnen Bauteile durch Steckverschlüsse und Bolzen erfolgt. Das dargestellte Schutzgerüst ist hier zur Bereitstellung eines Schutzportals ausgebildet, das durch zwei beabstandete Turmelemente 40 gebildet ist, welche durch ein Oberturmelement 60 längsendseitig miteinander verbunden sind. Beide Turmelemente stützen sich dabei jeweils an einem Standelement 10 ab, das mit einer Mehrzahl von Ankernägeln 80 am Untergrund verankert ist. Um eventuelle auf das Schutzgerüst 1 auffallende Leitungen zu schützen, ist an der Oberseite des Oberturms 60 eine Abdeckstange 90, beispielsweise aus Holz oder einem Kunststoffmaterial, befestigt. Darüber hinaus ist im oberen Endabschnitt der Turmelemente jeweils ein sich zu deren Längsrichtung und in der Portalebene schräg nach außen erstreckender Fangstab 85 vorgesehen, welcher als Fangeinrichtung für herabfallende Leitungen dient.

Erkennbar weisen sowohl die Turmelemente als auch das Obergurtelement eine flächige Rahmenstruktur auf mit zwei parallelen, hier durchgehenden und beabstandeten Längsprofilen bzw. Längsstäben, welche durch querverlaufende Streben verbunden sind. In der angegebenen Ausführungsform weist die jeweiligen Rahmenstruktur zwei unterschiedliche querverlaufende Streben auf, namentlich solche, die sich senkrecht zwischen den parallelen Längsstreben erstrecken und solche, welche sich schräg bzw. diagonal, d.h. mit einer Längs- und einer Querkomponente zwischen den Längsstreben erstrecken. In der beschriebenen Ausführungsform sind Standelemente, Turmelemente und Obergurtelement aus einem verzinkten Stahl hergestellt, wodurch mit der beschriebenen Gestaltung in dieser Ausführungsform eine Traglast auf das Obergurtelement von ca. 200 kg pro Knoten im Obergurtelement, also hier ca. 1600 kg bereitgestellt werden kann. Es versteht sich, dass die Abmessungen der Turmelemente und Gurtelemente an die notwendige Höhe bzw. Breite des Gerüsts angepasst werden kann. Darüber hinaus besteht bei dem erfindungsgemäßen Schutzgerüst die Möglichkeit der Erweiterbarkeit, insbesondere in der Portalebene, worauf untenstehend noch näher eingegangen wird.

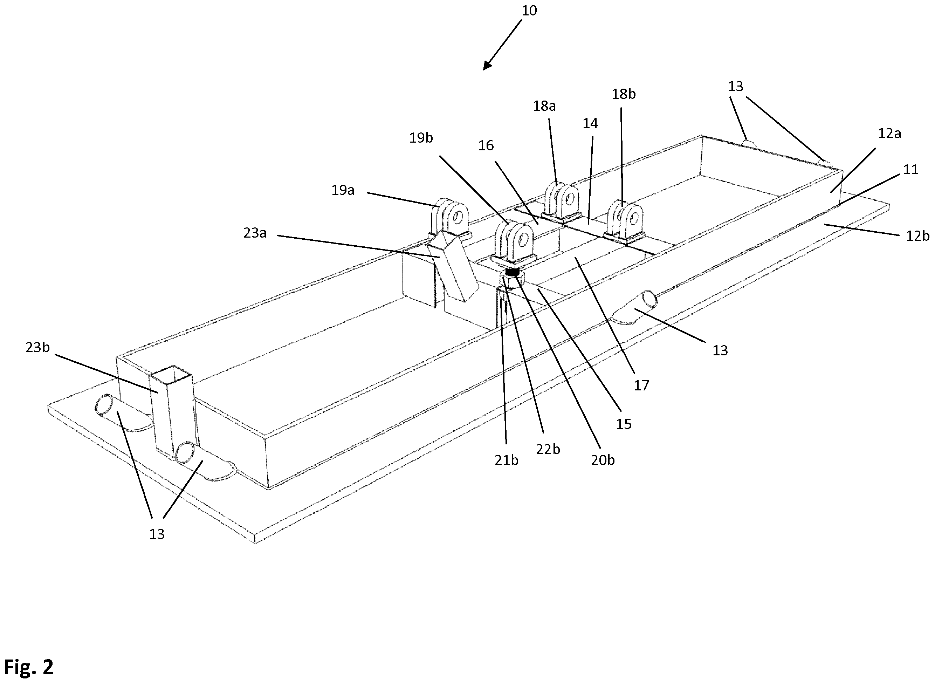

Zum besseren Verständnis des Aufbaus des erfindungsgemäßen Schutzgerüstes werden zunächst die Einzelbauteile im Detail erläutert. Hierzu zeigt Figur 2 das Standelement 10 des Schutzgerüstes 1 der Figur 1 in einer perspektivischen Ansicht. Das Standelement 10 weist hier eine rechteckförmige Grundfläche auf, die durch einen Rahmen 11 festgelegt wird, der durch verschweißte L-Profile gebildet ist. Der Schenkel 12b stellt dabei auf seiner in Figur 2 angegebenen Unterseite eine Auflagefläche des Standelementes am Untergrund bereit. Umfänglich beabstandet erstrecken sich schräg, hier in einem Winkel von etwa 45°, eine Mehrzahl von rohrförmigen Ankernagelführungen 13 zur jeweiligen Aufnahme eines Ankernagels 80 (siehe Figur 1) zur Verankerung oder Arretierung des Standelements 10 am Untergrund. An der Innenseite des Schenkels 12a des L-Profilrahmens 11 sind zwei beabstandete Querstreben 14, 15 angebracht, hier verschweißt, welche jeweils zwei in Querrichtung beabstandete gelochte Verbindungsdoppellaschen 18a, b bzw. 19a, b tragen. Während die erstgenannten Verbindungslaschen starr an ihrer Querstrebe 14 befestigt, beispielsweise verschweißt sind, sind die Verbindungsdoppellaschen 19a, b an ihrer zugeordneten Querstrebe 15 in eine Richtung senkrecht zur Standfläche, d.h. zum Schenkel 12b verstellbar angeordnet. Wie in der Figur für die Doppellasche 19b erkennbar, ist diese endseitig an einem Bolzen 20b befestigt, welcher mittels zweier Bolzenmuttern 21b, 22b zur Strebe 15 höhenverstellbar angeordnet ist. Die in der Figur teilweise verdeckte Verbindungsdoppellasche 19a ist in gleicher Weise höhenverstellbar zur Querstrebe 15 befestigt.

In Querrichtung mittig zwischen den Verbindungslaschen 19a, 19b bzw. 18a, 18b sind zwei in Längsrichtung des Standelements 10 beabstandete Rohraufnahmen 23a, b angebracht, hier angeschweißt, welche als Gestellaufnahme zum Befestigen einer Seilwinde für die Errichtung des erfindungsgemäßen Schutzgerüstes bzw. für das Aufschwenken des Schutzportals, ausgehend von einer Montageposition in eine Arbeitsposition dienen, worauf untenstehend eingegangen wird. Während die Rohraufnahme 23b mit hier rechteckförmigem Querschnitt mit ihrer Achse senkrecht zur Auflagefläche des Standelements verläuft, erstreckt sich die in der beschriebenen Ausführungsform auch rechteckförmige Rohraufnahme 23a, die an der Querstrebe angeschweißt ist, an welcher die Verbindungsdoppellaschen 19a, b befestigt sind, schräg zur Standfläche, in dem angegebenen Beispiel in einem Winkel von etwa 45°.

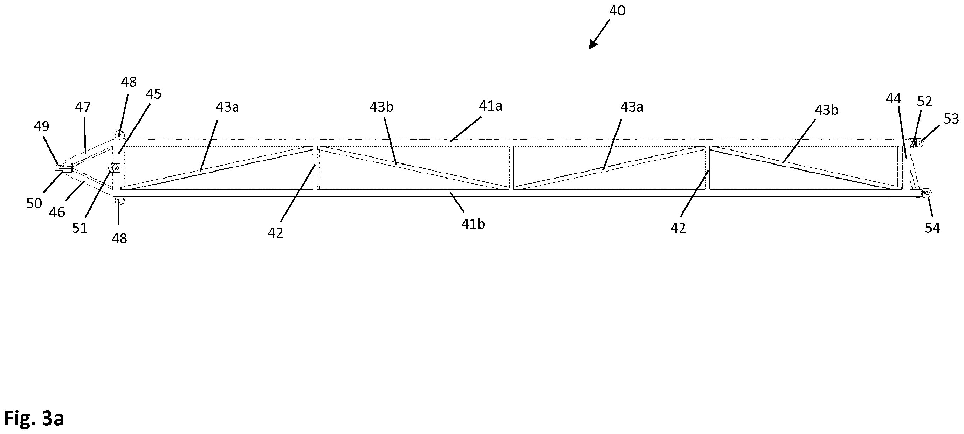

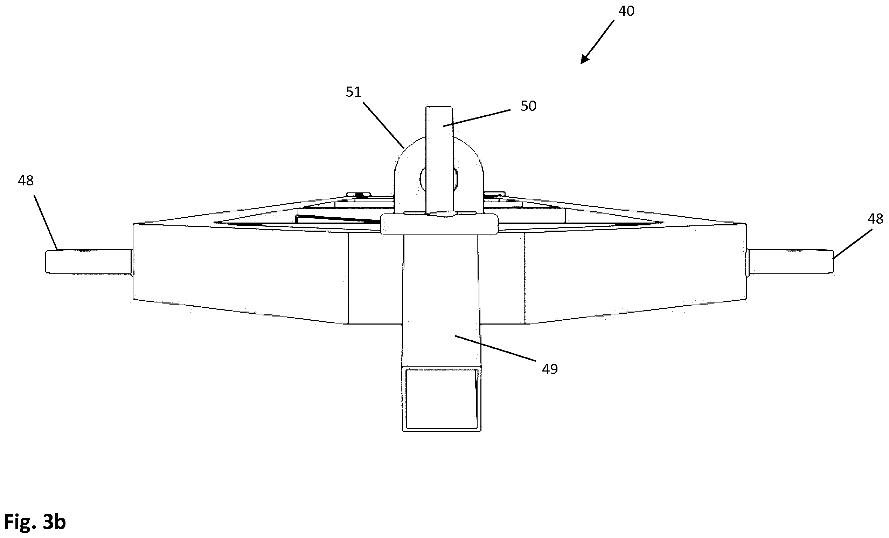

Die Figuren 3a, b zeigen den Aufbau der hier identisch aufgebauten Turmelemente 40 in einer Seitenansicht sowie in einer Oberansicht etwa in Richtung zur Längsachse des Elements, d.h. in einer Stirnseitenansicht. Die Rahmenstruktur des Turmelements 40 ist als Stabwerk ausgebildet und weist zwei beabstandete Längsstäbe 41a, b auf, die über eine Mehrzahl von Querstreben 42 verbunden sind, die sich zwischen den Längsstreben senkrecht erstrecken und darüber hinaus durch Diagonal- oder Schrägstreben 43a, b, die sich schräg zwischen den Längsstäben 41a, b erstrecken und mit diesen endseitig verbunden, hier verschweißt sind. Am obergurtseitigen Ende des Turmelements 40 sind die Endabschnitte der Längsstäbe 41a, b durch eine Querstrebe 45 verbunden, an die sich endseitig jeweils zwei Schrägstreben 46, 47 erstrecken, die an ihrem anderen Ende verschweißt sind zur Bildung einer dreieckförmigen, hier gleichschenkligen Aufnahme, wobei etwa mittig auf der Querstrebe 45 eine Verbindungsdoppellasche 51 und im Verbindungsbereich der beiden Schrägstreben 46, 47 eine Verbindungslasche 50 angeordnet ist, wobei die Verbindungslaschen 50, 51 um 90° zueinander versetzt sind zur Gestaltung einer starren Steckverbindung zwischen dem Turmelement und dem daran befestigten Obergurtelement. In Verlängerung der Querstrebe 46 sind beidseitig Ankerseilösen 48 zur Aufnahme eines Ankerseils vorgesehen, mit welchem das Schutzgerüst zusätzlich am Untergrund befestigt werden kann. Am anderen Ende des Turmelements 40 ist wieder zum Abschluss der beiden Längsstreben 41a, b eine Querstrebe 44 vorgesehen, an welcher sich dann in Längsrichtung die beiden Verbindungslaschen 53, 54 erstrecken. Dabei ist die Verbindungslasche 53 auf einen Schraubbolzen aufgesetzt, der in dem Längsstab 41a des Turmelements einschraubbar ist zur Höhenjustierung der Verbindungslasche 53.

Aus der Stirnseitenansicht der Fig. 3b ist die schräg zur Rahmenebene des Turmelements verlaufende Aufnahme 49 zur Aufnahme eines sich nach außen erstreckenden, hier nicht dargestellten Fangstabs, die Seilösen 48 sowie die senkrecht zueinander orientierten und in Längsrichtung des Turmelementes beabstandeten Verbindungslaschen 50, 51 erkennbar.

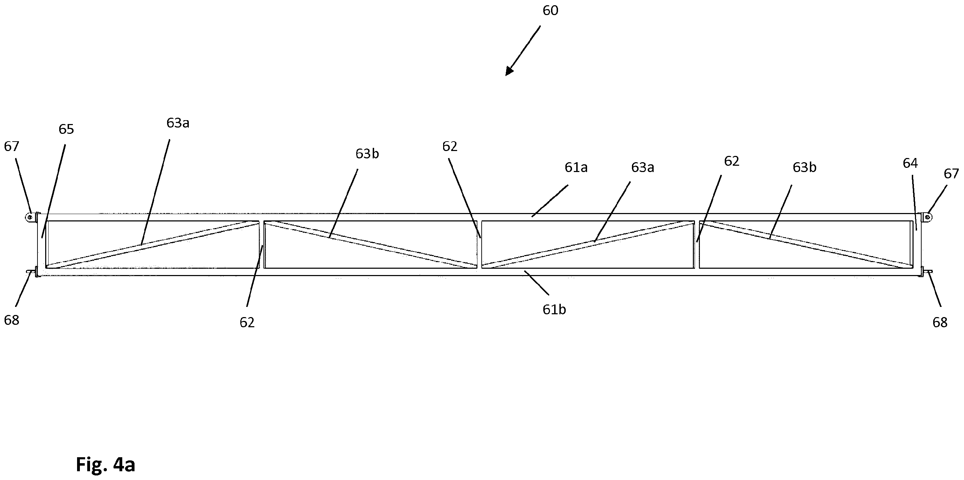

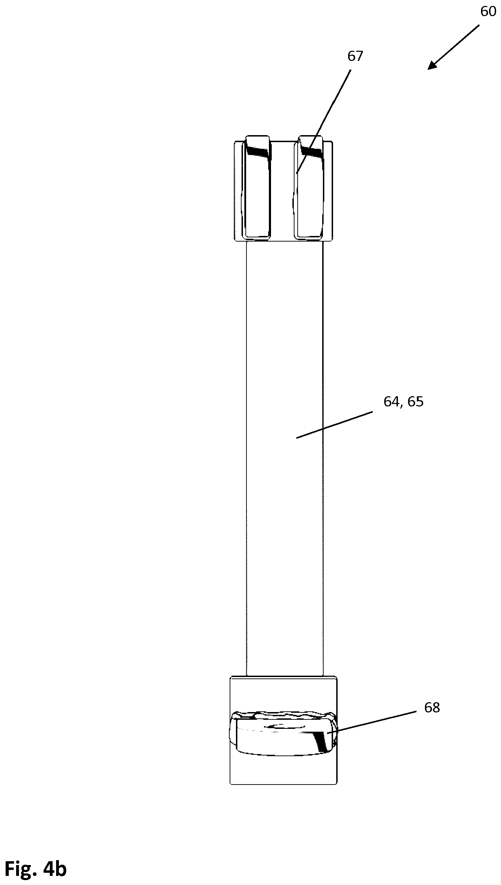

Die Figuren 4a, b zeigen das Obergurtelement 60 der Ausführungsform des beschriebenen erfindungsgemäßen Schutzgerüstes 1in einer Seitenansicht (Fig. 4a) und einer Stirnseitenansicht (Fig. 4b), wobei die Gestaltungen in Bezug auf die Verbindungsbereiche an beiden Stirnseiten, d.h. den beiden Längsenden des Obergurtelements 60 identisch aufgebaut sind. Die Rahmenstruktur des Obergurtelements 60 ist bis auf die Befestigungs- bzw. Verbindungsbereiche in den beiden Längsendabschnitten des Obergurtelements identisch zu dem Turmelement 40 (unter Vernachlässigung einer eventuellen unterschiedlichen Längenerstreckung) aufgebaut. Zwei beabstandete und parallel angeordnete Längsstäbe 61a, 61b mit hier rechteckigem Querschnitt sind über Querstreben 62 und Diagonalstreben 63a, b verbunden. In Verlängerung der Längsstäbe sind als Befestigungs- bzw. Verbindungsmittel an jeweils einer Stirnseite des Elements eine gelochte Verbindungs-Doppellasche 67 und eine gelochte Verbindungslasche 68 angeordnet, die sich in Bezug auf ihre Begrenzungsflächen senkrecht zueinander erstrecken, sodass die jeweiligen Verriegelungsbolzen zum Fixieren der jeweiligen Steckverbindung senkrecht zueinander orientiert sind.

Es sei bemerkt, dass grundsätzlich die Querschnitte der Stäbe bzw. Streben in der beschriebenen Ausführungsform rechteckig gestaltet sind, im Rahmen der Erfindung können jedoch auch andere Querschnitte gewählt werden. Ferner sei darauf hingewiesen, dass in der beschriebenen Ausführungsform die Steckverbindungen zwischen Standelement und Turmelement sowie Turmelement und Obergurtelement in Verbindung mit der Nutzung von Verbindungslaschen und Verbindungs-Doppellaschen beschrieben werden, die durch Einschieben eines Bolzens in die ausgerichteten Laschenbohrungen fixiert werden. Die Erfindung ist jedoch hierauf nicht beschränkt. Es liegt im Rahmen der Erfindung, andere sicherbare Steckverbindungen zwischen den Elementen vorzusehen, wobei diese Steckverbindung zumindest bei der Verbindung von Standelement und Turmelement die Funktion einer Schwenkverbindung bereitstellt.

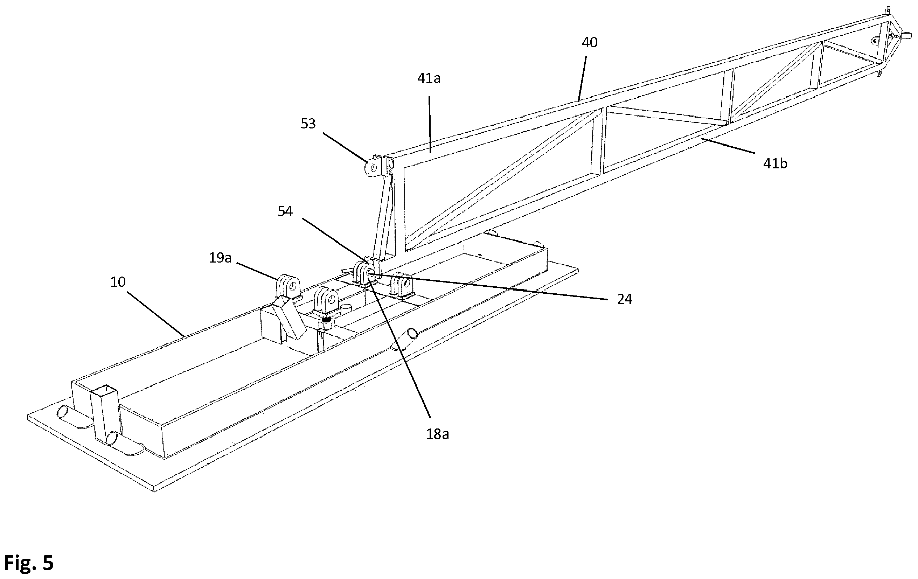

Figur 5 zeigt eine Momentaufnahme des Zusammenbaus des erfindungsgemäßen Schutzgerüstes 1, in welcher eine Schwenkverbindung zwischen einem Turmelement 40 und einem Standelement 10 realisiert ist. Hierzu ist die Verbindungslasche 54 in Verlängerung des Längsstabes 41b in den Zwischenraum der gelochten Doppellasche 18a des Standelementes 10 eingeschoben, wobei die Steckverbindung durch Einführen eines Sicherungsbolzens 24 in die ausgerichteten Lochungen der Verbindungslaschen 18a, 54 fixiert und der Bolzen 24 durch einen Splint 25 gesichert ist. In entsprechender Weise ist zum Zusammenbau des erfindungsgemäßen Schutzgerüstes das zweite Turmelement 40 an das zweite Standelement in entsprechender Weise zu befestigen. Eine entsprechende Beabstandung des vorderen Endabschnittes der Verbindungslasche 54 zur Basis der Doppellasche 18a und eine kreisförmige Gestaltung dieses Endabschnittes stellt sicher, dass die beschriebene Verbindung zwischen Standelement 10 und Turmelement 40 eine Schwenkverbindung darstellt, über welche das Turmelement relativ zum Standelement um die Achse des Sicherungsbolzens geschwenkt werden kann.

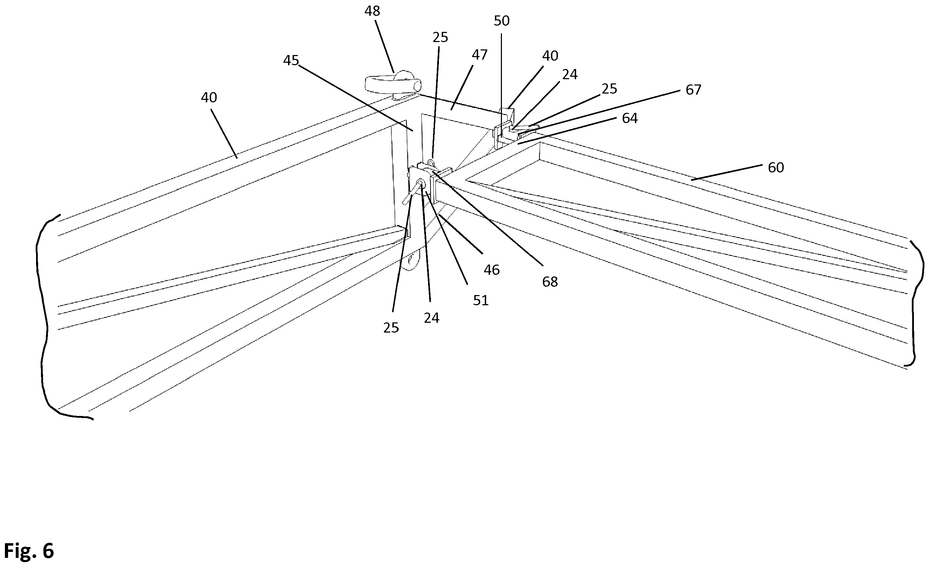

In einem weiteren Schritt kann das Obergurtelement an den beiden Turmelementen befestigt werden. Figur 6 zeigt einen Ausschnitt, in welchem die Endabschnitte beider Elemente 40, 60 zur Darstellung dieser Verbindung gezeigt sind. In der beschriebenen Ausführungsform ragt die gelochte Verbindungslasche 68 des Obergurtelements in den Zwischenraum der gelochten Verbindungs-Doppellasche 51 des Turmelements, wobei sich durch die ausgerichteten Laschenlochungen ein Sicherungsbolzen 24 erstreckt, der zu beiden Enden mittels Splinte 25 gesichert ist. In ähnlicher Weise ragt die Verbindungslasche 50 des Turmelements in den Zwischenraum der Verbindungs-Doppellasche 67 des Obergurtelements, wobei diese Steckverbindung wiederum über einen Bolzen 24 gesichert ist, der endseitig jeweils einen Splint 25 zur Fixierung der Verbindung umfasst. Da die beiden angegebenen Laschenverbindungen zwischen dem Turmelement und dem Obergurtelement um 90° zueinander verdreht sind, ist diese Verbindung in alle Richtungen starr zur Ableitung beliebiger, auf das Obergurtelement einwirkenden Kräfte eingerichtet.

Nach der Befestigung des Obergurtelements 60 an beiden Turmelementen 40 wird zum Schutz von Leitungen, die eventuell auf das erfindungsgemäße Schutzgerüst aufschlagen, auf dem oberen Längsstab 61a eine Abdeckstange 90 befestigt, die in der beschriebenen Ausführungsform aus Kunststoff oder Holz hergestellt ist.

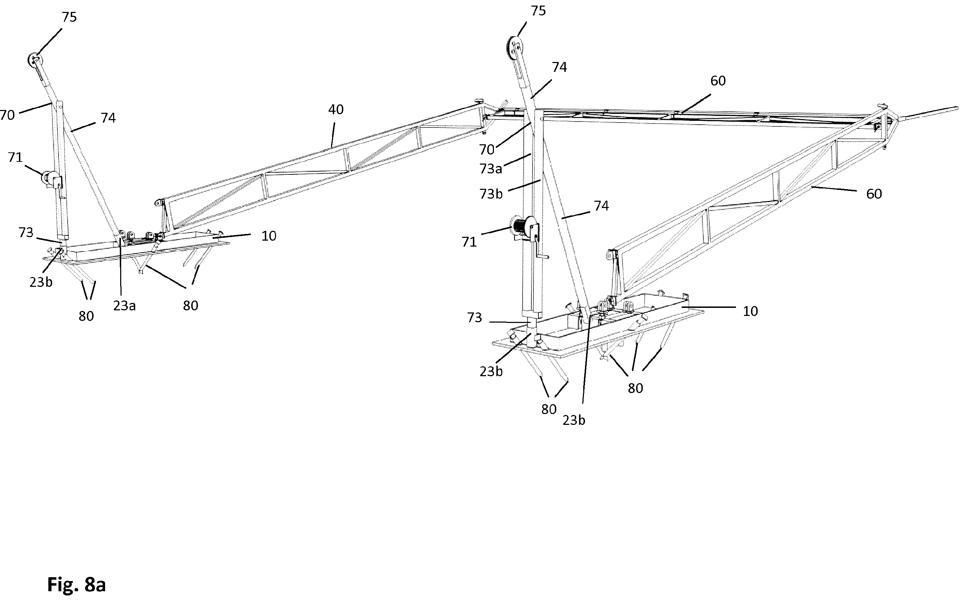

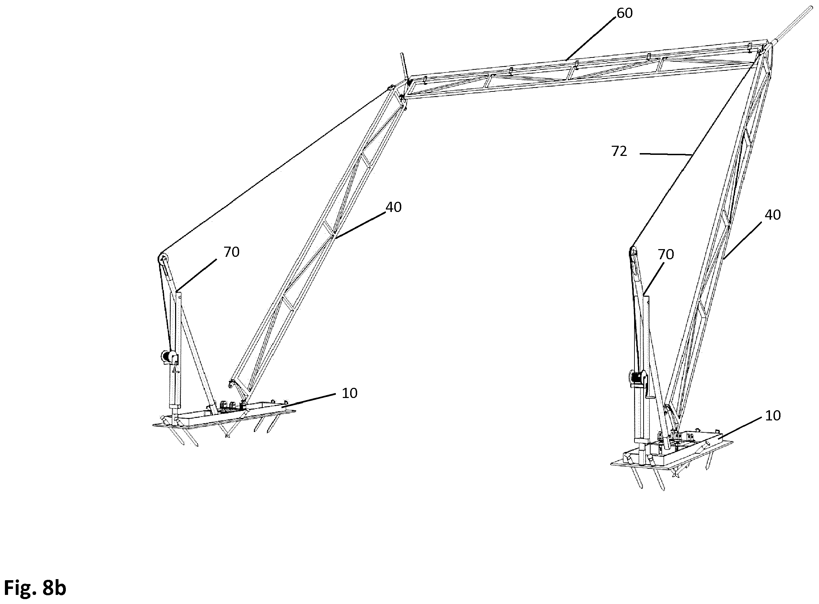

Mit der Befestigung der beiden Turmelemente an den jeweiligen Standelementen und der Befestigung des Obergurtelements 60 an den beiden Turmelementen 40 ist eine Montageposition bzw. Montageanordnung des Schutzgerüsts realisiert unter Bereitstellung eines durch die beiden Turmelemente und das Obergurtelement gebildeten Schutzportals, das aus dieser Montageposition in eine Arbeitsposition dadurch gebracht werden kann, dass das Portal von einer horizontalen bzw. annähernd horizontalen Montageposition in die Vertikale geschwenkt wird, wobei die Schwenkachse des Portals durch die angegebenen, koaxial verlaufenden Sicherungsbolzen 24 der Schwenkverbindungen zwischen den Standelementen 10 und den Turmelementen 40 festgelegt ist. Figur 8a zeigt das erfindungsgemäße Schutzgerüst in der angegebenen Montageanordnung bzw. -position, in welcher die Teile in Bodennähe zusammengesetzt werden, um nachfolgend in die Vertikale geschwenkt zu werden zur Einstellung der beschriebenen und in Figur 1 angegebenen Arbeitsposition. Die Figuren 8a, b zeigen das Aufschwenken des Gerüsts ausgehend von der in Figur 8a dargestellten Montageposition, bei welcher in der beschriebenen Ausführungsform die Schutzportalebene nicht vollständig horizontal liegt, sondern in einem flachen Winkel zur Horizontalen, z.B. durch leichtes Aufbocken des Portals zum Untergrund.

Durch den Zusammenbau des Schutzportals, umfassend die beiden Turmelemente sowie das Obergurtelement und die Befestigung der beiden Turmelemente an dem jeweils zugeordneten Standelement 10 in Form einer jeweiligen Schwenkverbindung sind beide Schwenkverbindungen bewegungsgekoppelt und damit synchron auslenkbar. Letzteres ergibt sich durch die beschriebene starre Verbindung zwischen den Turmelementen und dem Obergurtelement, sodass in einer nicht gezeigten Ausführungsform das Aufschwenken durch Vorsehen einer einzelnen Seilwinde an einem der beiden Standelemente durchführbar ist, wenn das Zugmittel, hier in Form eines Seils 42 am Turmelement 40 angreift, das dem jeweiligen Standelement 10 zugeordnet ist. Wie insbesondere aus Figur 8b hervorgeht, kann in der beschriebenen Ausführungsform vorgesehen sein, das Zugseil 72 an der im oberen Abschnitt des Turmelements 40 angeordneten Ankerseilöse 48 zu befestigen. Dies hat den Vorteil, dass nach dem Aufrichten des Schutzportals das Zugseil als Ankerseil verwendet werden kann zur weiteren Stabilisierung des erfindungsgemäßen Schutzgerüsts durch eine Untergrundbefestigung des Ankerseils.

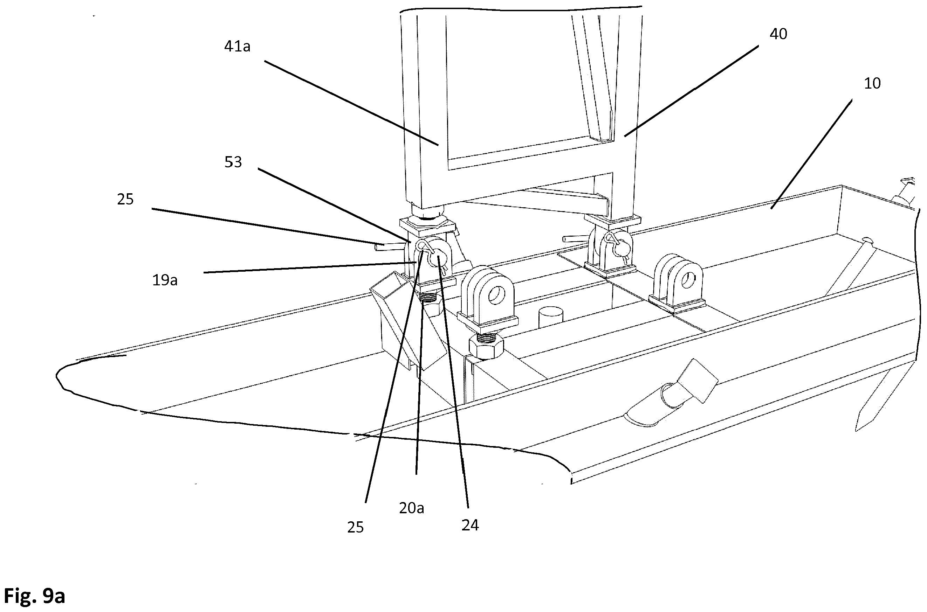

Nach dem Aufschwenken des Schutzportals in die Arbeitsposition bzw. Arbeitsanordnung befinden sich auch die Lochung der Verbindungsdoppellasche 19a des Standelements mit der Lochung der Verbindungslasche 53 des Turmelements in einer gegenseitigen Ausrichtung, so dass durch Einführen eines Sicherungbolzens 24 und sichern des Bolzens mit Splinten 25 die Schwenkverbindung zwischen Standelement und Turmelement fixiert bzw. blockiert werden kann, siehe Figur 9a. In gleicher Weise wird die Schwenkverbindung des Portals an dem anderen Turmelement 40bzw. Standelement 10 fixiert so dass damit das erfindungsgemäße Schutzgerüst betriebsbereit ist.

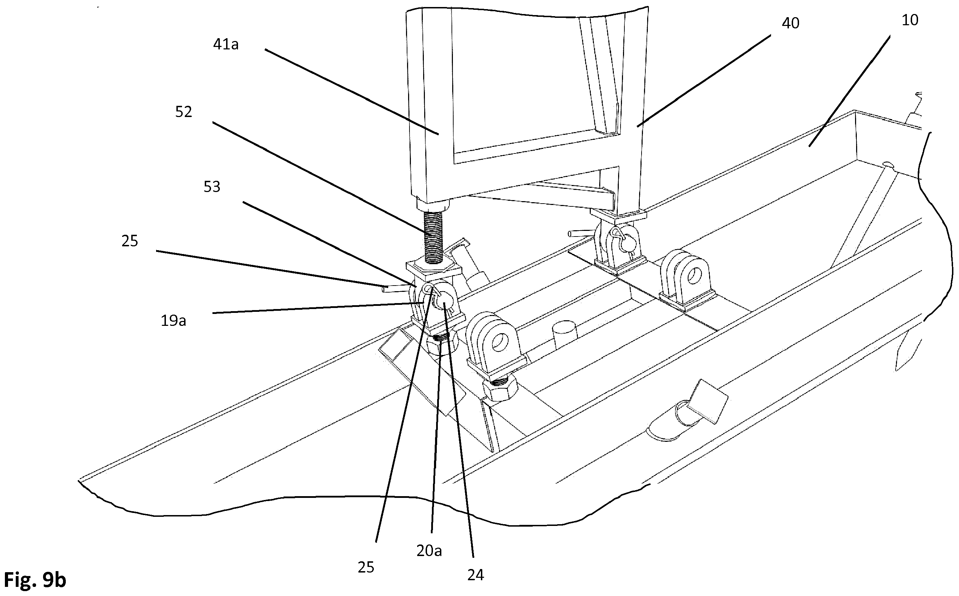

Figur 9B zeigt die Blockade der Schwenkverbindung zwischen Turmelement 40 und Standelement 10 in einer Situation, bei welcher das Standelement 10 auf einem schrägen Untergrund steht so dass zur vertikalen Ausrichtung des Turmelements dessen mit der Verbindungsdoppellasche 19a des Standelements 10 zusammenwirkende Verbindungslasche 53 in Längsrichtung dadurch verschiebbar gestaltet ist, dass der Schraubbolzen 52 aus der Längsstrebe 41a des Turmelements soweit herausgetreten und mit einer Bolzenmutter gesichert wird, dass die Querstrebe 44 des Turmelements horizontal verläuft. Wie aus Figur 9b ersichtlich, kann eine Längenanpassung dieser Verbindung zur Blockade der Schenkverbindung auch durch Anpassung der wirksamen Länge des Schraubbolzens 20a erfolgen, welcher die Verbindungsdoppellasche 19a trägt und mit einem Querträger des Standelementes 10 verschraubt ist.

Wie der Fachmann erkennt ist in der beschriebenen Ausführungsform das Standelement 10 ausgebildet, ein weiteres Turmelement über die Verbindungslaschen 28b, 29b in gleicher Weise wie das in Figur 9B gezeigte Turmelement aufzunehmen bzw. daran zu befestigen. Die so montierten Turmelemente sind parallel zueinander ausgerichtet und ermöglichen die Anordnung einer Vielzahl von nebeneinander stehenden Gerüstportalen, wobei in der beschriebenen Ausführungsform alle Portale in einer gemeinsamen Ebene liegen.

### Bezugszeichenliste

- 1: Schutzgerüst
- 10: Standelement
- 11: L-Profil-Rahmen
- 12a: Schenkel
- 12b: Schenkel
- 13: Ankernagelführung
- 14, 15: Querstrebe
- 16, 17: Längsstrebe
- 18a, b: Verbindungs-Doppellasche der Schwenkverbindung
- 19a, b: Verbindungs-Doppellasche der Blockierverbindung
- 20a, b: Schraubbolzen
- 21a, b: Bolzenmutter
- 22a, b: Bolzenmutter
- 23: Gestellaufnahme
- 23a, b: Rohraufnahme
- 24: Sicherungsbolzen
- 25: Splint
- 40: Turmelement
- 41a, b: Längsstab
- 42: Querstrebe
- 43a, b: Diagonalstrebe
- 44, 45: Querstrebe
- 46, 47: Schrägstrebe
- 48: Ankerseilöse
- 49: Fangstabaufnahme
- 50: Verbindungslasche
- 51: Verbindungs-Doppellasche
- 52: Schraubbolzen
- 53: Verbindungslasche
- 54: Verbindungslasche
- 60: Obergurtelement
- 61a, b: Längsstab
- 62: Querstrebe
- 63a, b: Diagonalstrebe
- 64, 65: Querstrebe
- 67: Verbindungs-Doppellasche
- 68: Verbindungslasche
- 70: Winde mit Zweibeingestell
- 71: Seiltrommel
- 72: Seil
- 73: Gabelbein
- 73a, b: Gabelschenkel
- 74: Gestellbein
- 75: Umlenkseil
- 80: Ankernagel
- 85: Fangstab
- 90: Abdeckstange

## Patentansprüche

1. Schutzgerüst (1), insbesondere Freileitungsschutzgerüst, zumindest umfassend
- zwei langestreckte Turmelemente (40);
- ein langgestrecktes Obergurtelement (60), dass zwischen den beiden Turmelementen (40)angeordnet und endseitig jeweils an einem der beiden Turmelemente zur Bereitstellung eines Gerüstportals befestigt ist,
wobei beide Turmelemente (40) jeweils im Bereich ihres, dem Obergurtelement abgewandten Längsendabschnitt mit einem zugeordneten Standelement (10) mittels einer Verbindungseinrichtung verbunden sind, und beide Standelemente (10) jeweils eine Standfläche zum Abstützen an einem Untergrund aufweisen,
**dadurch gekennzeichnet, dass** beide Verbindungseinrichtungen als gekoppelt auslenkbare und in einer Arbeitsposition blockierbare Schwenkverbindungen ausgebildet sind zum Schwenken des Gerüstportals zu den beiden Standelementen (10) ausgehend von einer Montageposition des Gerüstportals in die Arbeitsposition.

2. Schutzgerüst (1) nach Anspruch 1, **gekennzeichnet durch** eine an zumindest einem der Standelemente (10) abgestützte Krafteinrichtung zur Aufbringung einer am Gerüstportal angreifenden Zugkraft unter spitzem Winkel zur Portalebene über einem Winkelbereich von mindestens 10 Grad, vorzugsweise mindestens 15 Grad und besonders vorzugsweise mindestens 30 Grad zum Schwenken des Gerüstportals zwischen der Montageposition und der Arbeitsposition.

3. Schutzgerüst (1) nach Anspruch 2, **dadurch ge** - **kennzeichnet, dass** die Krafteinrichtung zumindest eine Windeneinrichtung wie eine Seilwinde umfasst, die sich an einem der Standelemente (10) abstützt und mittels eines Zugmittels mit dem Gerüstportal verbunden ist.

4. Schutzgerüst (1) nach Anspruch 3, **dadurch gekennzeichnet, dass** die Krafteinrichtung zwei Seilwinden umfasst, die sich jeweils an einem zugeordneten Standelement abstützen und jeweils mittels eines Zugmittels wie eines Seils (72) mit dem, diesem Standelement (10) zugeordneten Turmelement (40) des Gerüstportals verbunden sind und beide Seilwinden synchron betätigbar sind.

5. Schutzgerüst (1) nach einem der Ansprüche 2, 3 oder 4, **dadurch gekennzeichnet, dass** die Krafteinrichtung zumindest ein Zwei- oder ein Dreibeingestell aufweist, dass in das Standelement (10) einsteckbar ist.

6. Schutzgerüst (1) nach einem der Ansprüche 1 bis 5, **dadurch gekennzeichnet, dass** die Turmelemente (40) und/oder das Obergurtelement (60) eine flächige Rahmenstruktur aufweisen mit zwei parallel und beabstandeten Längsstäben (41a, b, 61a, b), welche durch querverlaufende Streben (42, 43a, b; 62, 63a, b) verbunden sind.

7. Schutzgerüst (1) nach einem der Ansprüche 1 bis 6, **dadurch gekennzeichnet, dass** die Turmelemente (40) am obergurtseitigen Ende jeweils eine dreieckförmige Koppelstruktur aufweisen, gebildet durch eine Querstrebe (45) und zwei jeweils endstämmig darauf aufgesetzte und aufeinander zulaufende, an einem Endabschnitt miteinander verbundene Schrägstreben (46, 47), wobei etwa mittig an der Querstrebe (45) und im Bereich des Endabschnittes der beiden Schrägstreben (46, 47) jeweils ein Steckverbinderelement angeordnet ist, insbesondere in Form zumindest einer gelochten und sich senkrecht zur Längsrichtung des Turmelements (40) und senkrecht zur Querstrebe (45) erstreckenden Verbindungslasche (50, 51), jeweils zum Befestigen des Obergurtelements (60) an eines der beiden Turmelemente (40) .

8. Schutzgerüst (1) nach einem der Ansprüche 1 bis 7, **dadurch gekennzeichnet, dass** das Obergurtelement (60) längsendseitig jeweils zumindest zwei in Querrichtung beabstandete und sich in Längsrichtung erstreckende Steckverbinderelemente, insbesondere in Form von gelochte Verbindungslaschen (67, 68) aufweist zum Befestigen des Obergurtelements (60) an die beiden Turmelemente (40).

9. Schutzgerüst (1) nach Anspruch 7 bis 8, **dadurch gekennzeichnet, dass** zum Befestigen des Obergurtelements (60) an die beiden Turmelemente (40) jeweils einander zugeordnete Verbindungslaschen (50, 67; 51, 68) überlappen mit zueinander ausgerichteten Lochungen, durch welche sich jeweils ein Bolzen (24) erstreckt.

10. Schutzgerüst (1) nach einem der Ansprüche 1 bis 9, **dadurch gekennzeichnet, dass** die Turmelemente (40) und zugeordnete Standelemente (10) in Einbaulage zur Bereitstellung der Schwenkverbindung sich überlappende Verbindungslaschen (54, 18a) aufweisen mit zueinander ausgerichteten Lochungen, durch welche sich ein Bolzen (24) erstreckt, dessen Achse die Schwenkachse des Portals festlegt.

11. Schutzgerüst (1) nach 10, **dadurch gekennzeichnet, dass** die Turmelemente (40) und zugeordnete Standelemente (10) in Einbaulage zur Bereitstellung einer Blockade der Schwenkverbindung in einer Arbeitsposition zu den Verbindungslaschen (54, 18a) der Schwenkverbindung in Richtung etwa senkrecht zur Portalebene beabstandete weitere sich überlappende Verbindungslaschen (53, 19b) aufweisen mit zueinander ausgerichteten Lochungen, durch welche sich ein weiterer Bolzen (24) erstreckt.

12. Schutzgerüst (1) nach einem der Ansprüche 1 bis 11, **dadurch gekennzeichnet, dass** die Standelemente (10) jeweils einen etwa rechteckförmigen Rahmen (11) aus L-Profilstäben umfassen, wobei zur Fixierung des jeweiligen Standelements am Untergrund eine Mehrzahl von umfänglich auf dem Rahmen beabstandete und an diesem befestigte Rohraufnahmen zum jeweiligen Führen eines einsetzbaren Ankernagel (80) vorgesehen ist, und die Rohraufnahmen (13) in einem Winkel von etwa 45 Grad zur Standfläche angeordnet sind, oder wobei zur Fixierung des jeweiligen Standelements am Untergrund am Rahmen eine Aufnahme zur Aufnahme eines Gewichtskörpers vorgesehen ist.

13. Schutzgerüst (1) nach einem der Ansprüche 1 bis 12, **dadurch gekennzeichnet, dass** eine Verbindungseinrichtung zum Verbinden eines Turmelements (40), in Einbaulage im Bereich seines, dem Obergurtelement (60) abgewandten Längsendabschnitt mit einem zugeordneten Standelement (10) in Turmlängsrichtung verstellbar ausgebildet ist.

14. Schutzgerüst (1) nach einem der Ansprüche 1 bis 13, **dadurch gekennzeichnet, dass** zumindest ein Standelement (10) zur Verbindung mit zwei parallel und beabstandet zueinander ausgerichteten Turmelementen (40) ausgebildet ist zur Gestaltung einer Mehrzahl von Gerüstportalen, die bezüglich ihrer Portalebene parallel zueinander ausgerichtet sind.

15. Verfahren zum Errichten eines Schutzgerüstes (1), insbesondere eines Freileitungsschutzgerüstes, das zumindest zwei langestreckte Turmelemente (40), zumindest ein langgestrecktes Obergurtelement (60), dass zwischen den beiden Turmelementen angeordnet und endseitig jeweils an einem der beiden Turmelemente starr zur Bereitstellung eines Gerüstportals befestigt ist, sowie zumindest zwei Standelemente (10) aufweist, die eine Standfläche bereitstellen, und an welchen sich jeweils ein Turmelement (40) abstützt, wobei die Befestigung eines jeweiligen Turmelements an einem zugeordnetem Standelement (10) jeweils eine blockierbare Schwenkverbindung aufweist, zumindest umfassend die Schritte:
- Bereitstellen von zumindest zwei Standelementen (10);
- Bereitstellen von zumindest zwei Turmelementen (40);
- Bereitstellen von zumindest einem Obergurtelement (60) ;
- Herstellen einer Montageanordnung, bei welcher ein Gerüstportal, umfassend zwei durch ein Obergurtelement (60) starr verbundene Turmelementen (40), mit den zugeordneten Standelementen (10) über die jeweilige Schwenkverbindung verbunden wird, und bei welcher das Gerüstportal in senkrechter Richtung zur Portalebene abgestützt ist;
- Schwenken des Gerüstportals in eine Arbeitsposition, in welcher die Gewichtskraft des Gerüstportals im Wesentlichen vollständig über die Standelemente (10) abgeleitet wird; und
- Blockieren der Schwenkverbindungen zur Arretierung der Arbeitsposition des Gerüstportals.

16. Verfahren zum Errichten eines Schutzgerüstes (1) nach Anspruch 15, , **dadurch gekennzeichnet, dass** der Schritt des Herstellen der Montageanordnung umfasst:
- Befestigen der beiden Turmelementen (40) an dem Obergurtelement (60) zur Bereitstellung des Gerüstportals;
- Befestigen der beiden Turmelemente (40) jeweils an dem zugeordneten Standelement (10) mittels einer Schwenkverbindung.
